# EUROPÄISCHE PATENTANMELDUNG

(11) **EP 1 562 150 A2**
(43) Veröffentlichungstag der Anmeldung: **10.08.2005**
(21) Anmeldenummer: 04011597.4
(22) Anmeldetag: 15.05.2004
(51) Int. Cl.: G07B 15/00

(54) **Elektronische Parküberwachungsvorrichtung, System und Verfahren hierfür**

(30) Priorität: 04.02.2004 PL 36548404
(71) Anmelder: Krygler, Agenor, 03-902 Warschau (PL); Krygler, Alicja, 03-902 Warschau (PL)
(72) Erfinder: Krygler, Agenor, 03-902 Warszawa (PL); Krygler, Alicja, 03-902 Warszawa (PL)
(74) Vertreter: Richter, Werdermann, Gerbaulet & Hofmann

(57) **Zusammenfassung**

Ein elektronische Parküberwachungsvorrichtung zur Anzeige einer Parkzeit von Fahrzeugen soll leicht zu handhaben sein. Dies wird durch ein im Fahrzeug positionierbares, mobiles elektronisches Anzeigegerät (10) erreicht, das mittels eines Ladegerätes (11) durch elektronische Signale, die Parkzeiteinheiten entsprechen, aufladbar ausgebildet ist.

## Beschreibung

Die Erfindung betrifft eine Parküberwachungsvorrichtung, ein Ladegerät, ein System sowie ein Verfahren nach dem Oberbegriff des entsprechenden unabhängigen Anspruchs.

Es ist bekannt, an Parkplätzen einen zentralen Parkscheinautomaten aufzustellen. An diesem kann ein Parkschein gekauft werden, der die gültige Parkzeit anzeigt entsprechend der am Automaten bezahlten Parkgebühren. Der Parkschein wird hinter die Windschutzscheibe des Fahrzeuges aufgestellt.

Derartige Parkscheinautomaten sind relativ empfindlich. Sie können durch Randalismus leicht zerstört oder es kann leicht zu einem Defekt ihrer relativ aufwendigen und teuren Elektronik kommen. Auch ist ein im Automat integrierter Drucker fehleranfällig.

Der Parkschein muss gut sichtbar hinter die Windschutzscheibe gelegt werden, beispielsweise bei starkem Wind kann dieser noch bevor er aufgestellt wird, wegfliegen oder selbst im Fahrzeug leicht bzw. unbeabsichtigt herunterfallen, was einen unerwünschten Strafzettel zur Folge hat.

Zumindest ist das Ablesen der Parkzeit für einen Ordnungsbeamten zeitaufwendig, da er stets die genaue Parkzeit lesen muss.

Bekannt sind auch im Freien aufstellbare Parkzeituhren, wobei an jedem Parkplatz eine eigene Parkzeituhr vorhanden ist. Diese Lösung ohne Parkscheinautomat setzt sich immer weniger durch, da durch die Vielzahl der stabil zu bauenden Uhren eine solche Lösung relativ teuer ist.

Der Erfindung liegt daher die Aufgabe zugrunde, eine Parküberwachungsvorrichtung der gattungsgemäßen Art zu schaffen bzw. Lösungen zu finden, bei denen sowohl für einen Parkplatzbenutzer als auch für einen Ordnungsbeamten oder anderen Wächter eine bequeme Handhabung möglich ist.

Diese Aufgabe wird durch die kennzeichnenden Merkmale der unabhängigen Ansprüche in Verbindung mit ihren Oberbegriffsmerkmalen gelöst.

Durch das im Fahrzeug positionierbare, erfindungsgemäße mobile elektronische Anzeigegerät, kann ein ausgedruckter Parkschein entfallen. Das Gerät bietet eine leichte Handhabung, zumal es erfindungsgemäß mittels eines Ladegerätes durch elektronische Signale, die Parkzeiteinheiten entsprechen, aufladbar ausgebildet ist. Es kann stets im Vergleich zum Parkschein stets wiederverwendet werden. Eine Elektronik für das Anzeigegerät sowie für das Ladegerät kann aus sehr einfachen Schaltungen bestehen, die weitaus weniger fehleranfällig sind. Auch ist diese Lösung praktisch wartungsfrei.

Das Anzeigegerät ist sehr gut sichtbar anzubringen und ist leicht durch vorzugsweise ein Guthaben an Parkzeit aufzuladen, insbesondere wenn nach einer vorteilhaften Weiterbildung der Erfindung ein Signalübertragungselement einerseits in das Ladegerät und andererseits im mobilen Anzeigegerät vorhanden ist, derart, dass eine Übertragung der elektronischen Signale, die Parkzeiteinheit bestimmen, möglich ist. Das Guthaben muss nicht vollständig bei einer einmaligen Parkplatzbenutzung aufgebraucht werden, was sehr gerecht ist. Ein noch nicht verbrauchtes Guthaben kann für ein anderes Mal benutzt werden.

Zweckmäßigerweise besitzt das Anzeigegerät (Parkbox) mindestens ein Schaltelement zur Aufladung und/oder Verbrauch der Parkzeiteinheiten.

Nach einer weiteren bevorzugten Ausführungsform des erfindungsgemäßen Anzeigegerätes ist vorgesehen, dass eine Anzeige bzw. ein Kontrollfeld zur Überwachung des Parkzeitguthabens und/oder einer verbrauchten Parkzeit umfasst. Von einem Wächter oder der parkenden Person selbst kann der Status des Gerätes leicht kontrolliert werden.

Sehr günstig ist es, wenn das mobile Anzeigegerät mit einem optischen Signalelement, insbesondere einer blinkenden Leuchtdiode ausgestattet ist, die signalisiert, dass eine Parkzeit verbraucht wird. Bei dieser vorteilhaften Maßnahme spart ein Wächter sehr viel Zeit bei der Parkplatzkontrolle, da keine Zahlenwerte abzulesen sind. Blinkt die Diode ist alles korrekt. Blinkt sie nicht, ist kein Guthaben vorhanden, so dass eine Verwarnung fällig ist.

Bei einer leicht zu handhabenden, einfachen Lösung ist vorgesehen, dass das Signalelement sowie ein Verbrauchselement der Parkzeit manuell aktivierbar ist. Dies kann mit einem einfachen Schalter oder Taster realisiert werden. Eine Deaktivierung mit diesem Schalter oder Taster ist natürlich günstig.

Um eine Zählung bzw. Subtraktion von einem Parkguthaben zu erreichen, ist das mobile Anzeigegerät mit einem Zähler versehen und zwar zum Zählen der verbrauchten Parkzeiteinheiten, die von dem Guthaben abgezogen werden.

Bei der praktischen Handhabung ist es ideal, wenn das mobile Anzeigegerät ein kastenförmiges Gehäuse besitzt, insbesondere als eine hinter eine Windschutzscheibe aufstellbare Parkbox ausgebildet ist, wobei das Gehäuse vorzugsweise eine gegenüber einem Gehäuseboden geneigte Gehäuseoberseite aufweist, insbesondere derart, dass ein Anzeigefeld von einer Außenseite einer Windschutzscheibe sichtbar ist. Das sichere Aufstellen hinter die Windschutzscheibe ist leicht. Das Gerät kann leicht transportiert werden und kann vom Wächter o. dgl. schnell gesichtet werden, besonders durch z. B. blinkende rote Dioden.

Um eine Aufladung des mobilen Anzeigegerätes ausführen zu können, ist zweckmäßigerweise das Ladegerät mit mindestens einem Signalübertragungselement zur Übermittlung der elektronischen Signale versehen. Insbesondere wenn nach einer weiteren Weiterbildung ein Ladeschacht und/oder eine Aufnahmeführung zur Aufnahme des mobilen Anzeigegerätes vorgesehen ist. Das Signalübertragungselement gelangt durch die Führung und einer einfachen manuellen Steckbewegung des mobilen Gerätes in den bevorzugterweise ortsfesten Auflader bzw. in das Ladegerät. Hierdurch ist eine Handhabung des erfindungsgemäßen Systems in einfacher und bequemer Weise gegeben.

Nach einer favorisierten Maßnahme ist entweder jedes Signalübertragungselement der mobilen Anzeigevorrichtung einerseits und des Ladegerätes andererseits als Kontaktelement, vorzugsweise Steckkontakt ausgebildet oder - alternativ hierzu - kann auch jedes Signalübertragungselement als berührungsloses Übertragungselement für, insbesondere Infrarot-, Funksignale, Transpondersignale, und/oder Ultraschallsignale ausgebildet sein.

Damit eine unerwünschte Manipulation der Geräte wirkungsvoll verhindert wird und so ein kostenloses oder kostengünstigeres Parken zu verhindern, beispielsweise durch eine verbotene Manipulation einer Taktfrequenz oder durch ein verbotenes kostenloses Aufladen von zu Hause aus mittels eines PCs, ist es angebracht, das erfindungsgemäße System durch ein Kodierungssystem zur Kodierung eines Parkguthabens und/oder eines Verbrauchs zu erweitern.

Daher wird nach einer weiteren vorteilhaften Weiterbildung des erfindungsgemäßen Parksystems jedes Ladegerät mit einer elektronischen Kodierungseinrichtung und jedes mobile Anzeigegerät mit einer Dekodierungseinrichtung ausgerüstet, so dass kein Betrug möglich ist.

Bei einer weiteren vorteilhaften Option, die für den praktischen Einsatz wichtig ist, ist jedes mobile Anzeigegerät und jedes Ladegerät mit einem Energiespeicher, insbesondere eine Batterie oder ein Akku versehen, das eine Energiekapazität für eine Stromversorgung von mindestens 5 Jahren, insbesondere etwa 7 - 8 Jahren umfasst.

Das mobile Anzeigegerät bewirkt bei seiner Aktivierung einen Verbrauch des Guthabens entsprechend der benutzten Parkzeit.

Leicht umzusetzen ist jedoch eine Aufstellung des Ladegerätes an Tankstellen und Supermärkten. Auf diese Weise kann schnell ein flächendekkendes Verkaufsnetz, vergleichbar wie bei Mobilfunkkarten, realisiert werden. Das Ladegerät kann ebenso als ein Automat, z. B. mit in das Anzeigegerät einzusteckende Guthabenkarten ausgebildet sein.

Weitere vorteilhafte Ausgestaltungen der Erfindung sind in den Unteransprüchen gekennzeichnet.

Ein Ausführungsbeispiel der Erfindung wird anhand der Zeichnung näher erläutert.

Es zeigen:
- Fig. 1: eine perspektivische Darstellung eines erfindungsgemäßen Anzeigegerätes,
- Fig. 2: eine perspektivische Darstellung eines erfindungsgemäßen Ladegerätes für das in Fig. 1 gezeigte Anzeigegerät,
- Fig. 3: ein Blockschaltdiagramm für ein aus Anzeigegerät und Ladegerät bestehendes System.

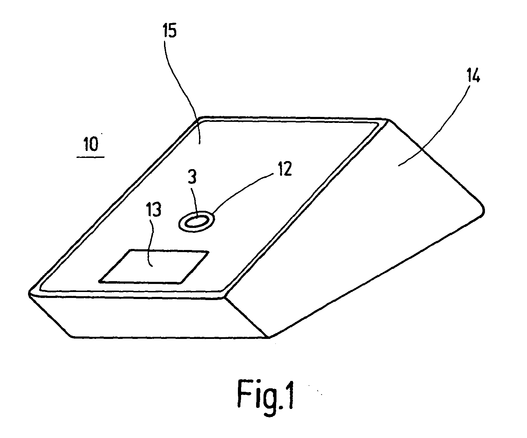

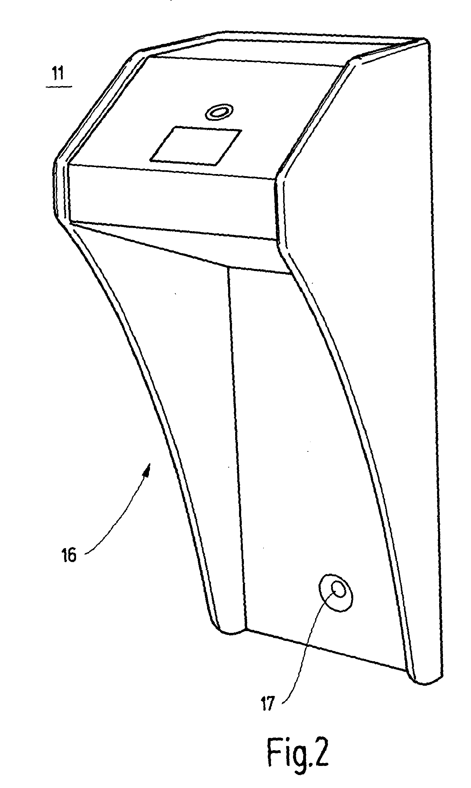

Fig. 1 veranschaulicht ein in einem Fahrzeug positionierbares, mobiles elektronisches Anzeigegerät 10, das erfindungsgemäß mittels einer in Fig. 2 dargestellten Ladegerätes 11 durch elektronische Signale, die Parkzeiteinheiten entsprechen, aufladbar ausgebildet ist. Das Anzeigegerät 10 mit seinem Ladegerät 11 dient zur elektronischen Parküberwachung bzw. zur Überwachung einer Parkdauer von Fahrzeugen. Vorzugsweise wird mit dem Ladegerät 11 ein Guthaben, z. B. 10 Stunden Parkdauer, auf das Anzeigegerät 10 geladen.

Wie Fig. 1 veranschaulicht, ist das mobile Anzeigegerät 10 mit einem optischen Signalelement 12, insbesondere einer blinkenden Leuchtdiode 3 ausgestattet, die signalisiert, dass eine Parkzeit von dem Guthaben verbraucht wird.

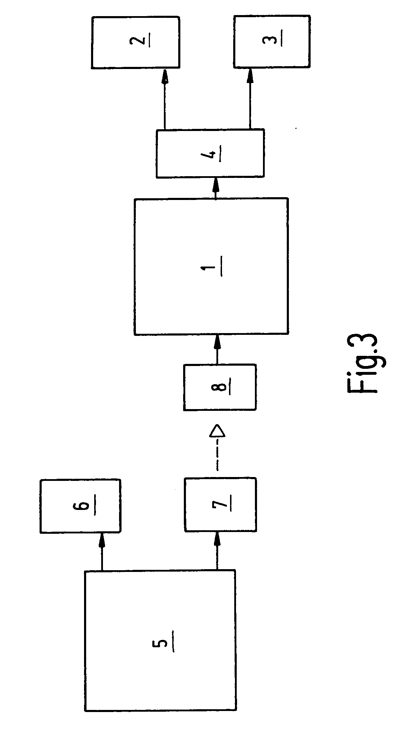

Die Blinkdiode 3 zeigt an, dass ein Verbrauchselement, insbesondere ein Zähler 2, aktiviert ist, das später naher in Fig. 3 gezeigt ist. Sie bzw. der Zähler werden bevorzugterweise manuell aktiviert.

Alternativ kann das Signalelement sowie der Zähler 2 der Parkdauer automatisch aktiviert werden. Insbesondere bei Erreichen einer Parkstellung oder beim Einfahren in einen Parkplatz, insbesondere einem Parkhaus.

Das mobile Anzeigegerät 10 besitzt ein Kontroll- bzw. Anzeigefeld 13 zur Überwachung insbesondere des Parkzeitguthabens und/oder einer verbrauchten Parkzeit vom integrierten Konto.

Das mobile Anzeigegerät 10 hat ein kastenförmiges Gehäuse 14, vorzugsweise ein kompaktes Gehäuse 14, welches ohne weiteres hinter eine Windschutzscheibe aufstellbar ist, sozusagen als Parkbox im Fahrgastraum. Das Gehäuse 14 hat, wie Fig. 1 zeigt, vorzugsweise eine gegenüber einem Gehäuseboden geneigte Gehäuseoberseite 15. Diese ist so ausgebildet, dass das Anzeigefeld 13 von einer Außenseite einer Windschutzscheibe gut sichtbar ist.

Aus Sicherheitsgründen ist bei einer favorisierten Lösung vorgesehen, dass in das mobile Anzeigegerät 10 eine Zerstörungseinrichtung installiert ist, mit einer Zerstörungskomponente, die eine elektrische und/oder mechanische Zerstörung beim Öffnen der Box bewirkt, so dass keine Manipulation möglich ist.

Fig. 2 veranschaulicht ein Ladegerät 11 bzw. einen Auflader für das Anzeigegerät 10 bzw. für die Parkbox. Das Ladegerät ist kompakt ausgebildet und hat kleine Abmessungen, so dass es leicht aufstellbar ist. Beispielsweise ist sie höchstens 7 cm breit und/oder höchstens 20 cm hoch und/oder 7,5 cm tief. Noch wesentlich kleiner ist die Parkbox selbst. Das Gehäuse sowie die Elektronik sollten so robust und stabil sein, dass eine Gebrauchsdauer von mindestens 7 Jahren erreicht wird. Innerhalb dieser Zeit sollte das Gerät wartungsfrei sein. Das Gehäuse besteht aus Kunststoff, einem metallischen Material oder aus einem anderen geeigneten Material.

Günstig sind eine oder mehrere Befestigungsbohrungen 17 zur Wandmontage.

Das Ladegerät 11 ist mit einem Ladeschacht und/oder eine Aufnahmeführung 16 zur Aufnahme des mobilen Anzeigegerätes 10 ausgestattet. Am Ende der Aufnahmeführung 16 ist mindestens ein Signalübertragungselement 7 vorhanden, das eine Schnittstelle zu dem Anzeigegerät 10 bildet, wobei an dem Anzeigegerät 10 ein weiteres Signalübertragungselement 8, wie Fig. 3 zeigt, vorgesehen ist.

Das Signalübertragungselement der mobilen Anzeigevorrichtung 10 einerseits und das Ladegerät 11 andererseits können als Kontaktelemente, vorzugsweise Steckkontakte, ausgebildet sein.

Ebenfalls möglich ist, dass die Signalübertragungselemente 7, 8 als berührungslose Übertragungselemente für, insbesondere Infrarot-, Funk-, Magnetfeldsignale, insbesondere Transpondersignale, und/oder Ultraschallsignale ausgebildet sind.

Insbesondere sind die Signalübertragungselemente 7, 8 als Schalter für die Übermittlung von Zeiteinheiten des Ladegerätes 11 direkt in das mobile Anzeigegerät 10 vorgesehen. Diese können als Kontaktschalter oder als kontaktlose Schalter ausgeführt sein.

An das Ladegerät 5 ist ein Kodierungssystem 5 bzw. eine elektronische Kodierungseinrichtung zur Kodierung der ein Parkguthaben und/oder ein Verbrauch bestimmenden Signale vorhanden. Dieses ist einerseits mit einem ersten Zähler 6 an dem Ladegerät verbunden. Der Zähler 6 zählt die vom Benutzer der Parkbox gewünschten Parkzeiteinheiten, die geladen werden sollen bzw. die gekauft werden möchten.

Anderseits ist das Kodierungssystem 5 mit dem Signalübertragungselement 7 bzw. dem Schalter oder Kontakt für eine Signalübertragung zur Parkbox verbunden.

Zur Dekodierung dieser Signale ist an dem mobilen Anzeigegerät 10 ein Dekodiersystem 1 bzw. eine elektronische Dekodierungseinrichtung 1 integriert, um die verschlüsselten Signale zu entschlüsseln. An seinem Eingang ist diese Einrichtung 1 mit dem Übertragungselement 8 verbunden, während ein Ausgang mit einem Schaltelement 4, bevorzugterweise einem Ausschalter, verbunden ist. Dieser ist wiederum mit einem zweiten Zähler 2 verbunden. Zweckmäßigerweise zählt der Zähler 2 Zeiteinheiten in Minuten, wenn die Parkbox aktiviert wird. Das Zählen des Zählers 2 kann rückwärts erfolgen, so dass zu sehen ist, wie das Guthaben durch das Parken vermindert wird. Das Anzeigegerät 10 löscht praktisch Zeiteinheiten, die im Laufe der Parkzeit verbraucht werden.

Das Schaltelement 4 ist auch, wie Fig. 3 zeigt, mit der Diode 3 verbunden, die bei Aktivierung der Box blinkt.

Das beschriebene System kann unabhängig von vorhandenen Systemen eingesetzt werden.

### Bezugszeichenliste

- 1: Dekodiersystem
- 2: Zähler (Anzeigegerät)
- 3: Leuchtdiode
- 4: Schaltelement
- 5: Kodiersystem
- 6: Zähler (Ladegerät)
- 7: Erstes Signalübertragungselement
- 8: Zweites Signalübertragungselement
- 9: -
- 10: Anzeigegerät
- 11: Ladegerät
- 12: Signalelement
- 13: Anzeigefeld
- 14: Gehäuse
- 15: Gehäuseoberseite
- 16: Aufnahmeführung
- 17: Befestigungsbohrungen

## Patentansprüche

1. Elektronische Parküberwachungsvorrichtung zur Anzeige einer Parkzeit von Fahrzeugen,
**gekennzeichnet durch**
ein im Fahrzeug positionierbares, mobiles elektronisches Anzeigegerät (10), das mittels eines Ladegerätes (11) **durch** elektronische Signale, die Parkzeiteinheiten entsprechen, aufladbar ausgebildet ist.

2. Elektronische Parküberwachungsvorrichtung nach Anspruch 1,
**dadurch gekennzeichnet,**
**dass** mindestens ein Signalübertragungselement einerseits in dem Ladegerät (11 ) und andererseits im mobilen Anzeigegerät (10) vorhanden ist, derart, dass eine Übertragung der elektronischen Signale, die Parkzeiteinheit bestimmen, möglich ist.

3. Elektronische Parküberwachungsvorrichtung nach einem der vorhergehenden Ansprüche,
**dadurch gekennzeichnet,**
**dass** das Anzeigegerät (10) mindestens ein Schaltelement zur Aufladung und/oder Verbrauch der Parkzeiteinheiten besitzt.

4. Elektronische Parküberwachungsvorrichtung nach einem der Ansprüche 1 bis 3,
**dadurch gekennzeichnet,**
**dass** das mobile Anzeigegerät (10) eine Anzeige- und Kontrollfeld (13) zur Überwachung des Parkzeitguthabens und/oder einer verbrauchten Parkzeit umfasst.

5. Elektronische Parküberwachungsvorrichtung nach einem der Ansprüche 1 bis 4,
**dadurch gekennzeichnet,**
**dass** das mobile Anzeigegerät (10) mit einem Zähler (2) versehen ist zum Zählen der verbrauchten Parkzeiteinheiten.

6. Elektronische Parküberwachungsvorrichtung nach einem der Ansprüche 1 bis 5,
**dadurch gekennzeichnet,**
**dass** das mobile Anzeigegerät (10) mit einem optischen Signalelement (12), insbesondere einer blinkenden Leuchtdiode (3) ausgestattet ist, die signalisiert, dass eine Parkzeit verbraucht wird.

7. Elektronische Parküberwachungsvorrichtung nach einem der Ansprüche 1 bis 6,
**dadurch gekennzeichnet,**
**dass** das Signalelement (8) sowie ein Verbrauchselement der Parkzeit manuell aktivierbar ist.

8. Elektronische Parküberwachungsvorrichtung nach einem der Ansprüche 1 bis 7,
**dadurch gekennzeichnet,**
**dass** das mobile Anzeigegerät (10) ein kastenförmiges Gehäuse (14) besitzt, insbesondere als eine hinter eine Windschutzscheibe aufstellbare Parkbox ausgebildet ist, wobei das Gehäuse (14) vorzugsweise eine gegenüber einem Gehäuseboden geneigte Gehäuseoberseite (15) aufweist, insbesondere derart, dass die Oberseite (15) von einer Außenseite einer Windschutzscheibe sichtbar ist.

9. Ladegerät (11) für eine elektronische Parküberwachungsvorrichtung nach einem der Ansprüche 1 bis 8,
**gekennzeichnet durch**
mindestens ein Signalübertragungselement (7) zur Übermittlung der elektronischen Signale.

10. System bestehend aus mindestens einer elektronischen Parküberwachungsvorrichtung nach einem der vorhergehenden Ansprüche und mindestens ein Ladegerät (11) nach einem der vorhergehenden Ansprüche.

11. System nach Anspruch 10,
**dadurch gekennzeichnet,**
**dass** jedes Signalübertragungselement des mobilen Anzeigegerätes (10) einerseits und das Ladegerät (11) andererseits als Kontaktelement, vorzugsweise Steckkontakte ausgebildet sind.

12. System nach einem der Ansprüche 10 und 11,
**dadurch gekennzeichnet,**
**dass** jedes Signalübertragungselement des mobilen Anzeigegerätes einerseits und des Ladegerätes (11) andererseits als berührungsloses Übertragungselement für, insbesondere Infrarot-, Funksignale, ausgebildet ist.

13. System nach einem der Ansprüche 10 bis 12,
**gekennzeichnet durch**
ein Kodierungssystem (7, 8) zur Kodierung der ein Parkguthaben und/oder Verbrauch bestimmenden Signale.

14. System nach einem der Ansprüche 10 bis 13,
**dadurch gekennzeichnet,**
**dass** jedes Ladegerät (11) eine elektronische Kodierungseinrichtung (1, 5) und jedes mobile Anzeigegerät (10) eine Dekodiereinrichtung (1) umfasst.

15. System nach einem der Ansprüche 10 bis 14,
**dadurch gekennzeichnet,**
**dass** jedes mobile Anzeigegerät (10) und/oder jedes Ladegerät (11) mit einem Energiespeicher, insbesondere eine Batterie oder ein Akku versehen ist, das eine Energiekapazität für eine Stromversorgung von mindestens 5 Jahren, insbesondere etwa 7 - 8 Jahren umfasst.

16. Verfahren zur Parkzeitüberwachung mittels mindestens einer Vorrichtung und mindestens einem Ladegerät (11) nach einem der vorhergehenden Ansprüche,
**dadurch gekennzeichnet,**
**dass** die Signale zum Auffüllen eines Guthabenkontos durch das Ladegerät (11) vorgesehen sind, und dass das mobile Anzeigegerät (10) bei Aktivierung ein Verbrauch des Guthabens entsprechend der benutzten Parkzeit bewirkt.
